(19) **Europäisches Patentamt**

**European Patent Office**

**Office européen des brevets**

(11) Veröffentlichungsnummer: **0 448 567 B1**

(12) **EUROPÄISCHE PATENTSCHRIFT**

(45) Veröffentlichungstag der Patentschrift: **01.09.93**

(51) Int. Cl.⁵: **B60T 8/66**

(21) Anmeldenummer: **89912430.9**

(22) Anmeldetag: **11.11.89**

(86) Internationale Anmeldenummer:
**PCT/EP89/01352**

(87) Internationale Veröffentlichungsnummer:
**WO 90/06874 (28.06.90 90/15)**

(54) **ANTIBLOCKIERREGELSYSTEM.**

(30) Priorität: **14.12.88 DE 3841957**

(43) Veröffentlichungstag der Anmeldung:
**02.10.91 Patentblatt 91/40**

(45) Bekanntmachung des Hinweises auf die
Patenterteilung:
**01.09.93 Patentblatt 93/35**

(84) Benannte Vertragsstaaten:
**AT DE FR GB SE**

(56) Entgegenhaltungen:
**EP-A- 45 253    WO-A-88/06544**
**DE-A- 2 706 132    DE-A- 3 707 235**
**FR-A- 2 387 824    US-A- 3 586 387**
**US-A- 3 612 622    US-A- 3 653 727**

(73) Patentinhaber: **ROBERT BOSCH GMBH**
**Postfach 30 02 20**
**D-70442 Stuttgart(DE)**

(72) Erfinder: **BEYER, Claus**
**Posener Strasse 19**
**D-7141 Schwieberdingen(DE)**
Erfinder: **DOMINKE, Peter**
**Rechentshofener Strasse 9**
**D-7120 Bietigheim-Bissingen(DE)**
Erfinder: **SONNTAG, Eberhard**
**Fleiner Strasse 10**
**D-7000 Stuttgart 40(DE)**

(74) Vertreter: **Kammer, Arno, Dipl.-Ing.**
**ROBERT BOSCH GmbH Zentralstelle**
**Patente-Elektronik Postfach 30 02 20**
**D-70442 Stuttgart (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

## Beschreibung

Stand der Technik

Aus der WO 88/06544 Fig. 7 mit zugehöriger Beschreibung ist es bekannt bei einem Antiblokkierregelsystem mit Verwendung des Schlupfes der Räder als Regelgröße zur Schlupfbildung ein Referenzgeschwindigkeitssignal und ein Hilfsreferenzgeschwindigkeitssignal zu erzeugen. Bei dem Hilfsreferenzgeschwindigkeitssignal bestimmt das gefilterte Geschwindigkeitssignal des schnellsten Rads dessen Verlauf. Die Steigung dieses Hilfsreferenzgeschwindigkeitssignals dient nur zur Festlegung der Steigung des Referenzgeschwindigkeitssignals bei Raddrehzahleinbruch, wobei die Größe dieses Signals im Regelfall sonst durch das zweitschnellste Rad bestimmt wird.

Vorteile der Erfindung

Die erfindungsgemäße Bildung des Referenzsignals mit der Umschaltung auf eine andere Einflußgröße im Regelfall hat den Vorteil, daß außerhalb der Regelung die Größe des Referenzignals durch die vom Antrieb unbeeinflußten Vorderräder und zwar deren Mittelwert erzeugt wird, daß jedoch im Regelfall auf jeden Fall ein Hinterrad die Größe des Referenzsignals beeinflußt, wenn das Radgeschwindigkeitssignal das Referenzsignal übersteigt.

Zusätzlich bewirkt die erfindungsgemäße Ausbildung, daß der Regler zwischen leichten Anbremsen und einem Bremsen auf geringen $\mu$ unterscheiden kann. Bei schwachem Anbremsen verrringern die Räder gemeinsam ihre Geschwindigkeit. Bei der Bildung der Summe S der Beträge der Schlüpfe überschreitet diese nicht die Schwelle und es erfolgt hier keine Umschaltung vor dem Regelbeginn.

Demgegenüber laufen die Radgeschwindigkeiten beim Bremsen auf niedrigem $\mu$ auseinander, sodaß gegenüber dem Mittelwert der Geschwindigkeiten der nicht angetriebenen Räder, also der Referenz Schlüpfe entstehen, deren Betragssumme S die Schwelle a übersteigt. Dann erfolgt bereits vor dem Einsetzen der Regelung eine Umschaltung auf die Referenzbildung durch das zweitschnellste Rad. Damit wird das Vorliegen eines Schlupfs früher erkannt als ohne Umschaltung, d.h. die Regelung setzt bei geringen $\mu$ früher ein. Die Unteransprüche enthalten weitere vorteilhafte Ausgestaltungen der Referenzbildung.

Figurenbeschreibung

Anhand der Zeichnung wird ein Ausführungsbeispiel der Erfindung erläutert.

Es zeigen:

Fig. 1    ein Blockschaltbild eines Ausführungsbeispiels

Fig. 2 und 3    Diagramme zur Erläuterung

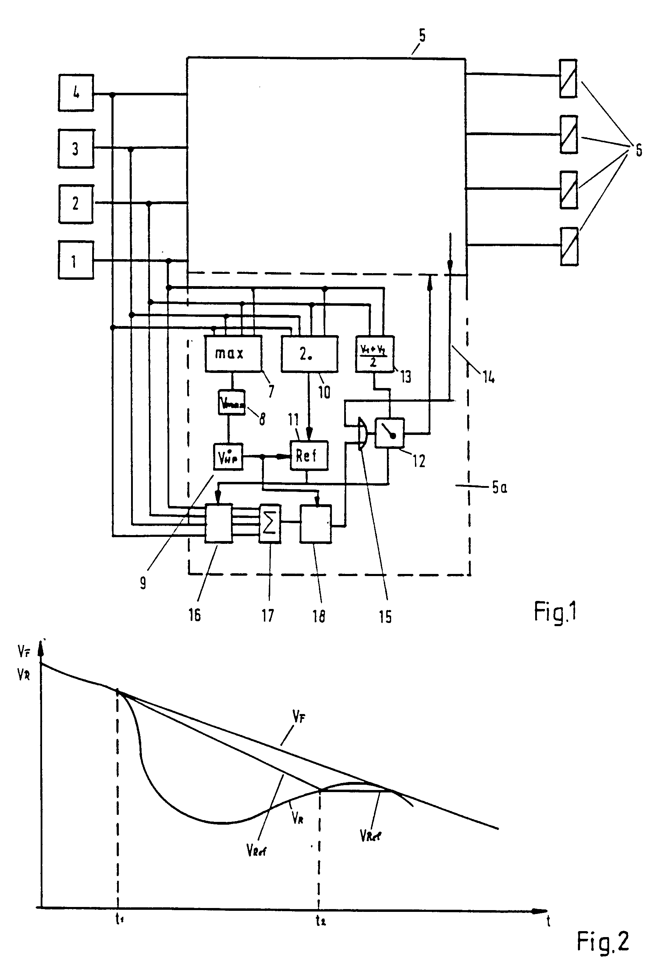

In Fig. 1 sind mit 1 - 4 die den Fahrzeugrädern zugeordnete Radgeschwindigkeitsmeßwertgeber bezeichnet, die ihre Signale an eine Auswerteschaltung 5 geben. 1 und 2 sind die Meßwertgeber der nicht angetriebenen Vorderräder. Die Auswerteschaltung 5 steuert ihrerseits aufgrund der Meßwertgebersignale den Rädern zugeordnete 3/3 Magnetventile 6 und variert den Bremsdruck an den Rädern im Sinne der Vermeidung eines zu großen Bremsschlupfs.

Hierzu kann der Bremsschlupf gebildet und mit einem Sollbremsschlupf verglichen werden oder der Schlupf in anderer Weise zur Druckregelung benutzt oder mit benutzt werden. Unter Schlupf soll hier sowohl die Differenz zwischen der Referenzgeschwindigkeit und der Radgeschwindigkeit als auch diese Differenz bezogen auf die Referenzgeschwindigkeit verstanden werden.

Zur Schlupfbildung wird wie oben gezeigt eine Referenzgeschwindigkeit benötigt. Diese kann wie in der WO88/06544 anhand der Fig. 7 beschrieben, gebildet werden. Zu ihrer Bildung wird die Steigung eines Hilfsreferenzgeschwindigkeitssignals benutzt. Die erfindungsgemäße Bildung des Referenzgeschwindigkeitssignals und des Hilfsreferenzgeschwindigkeitssignals geschieht im unteren Teil 5a der Auswerteschaltung 5.

In einem Block 7 innerhalb der Auswerteschaltung wird die Geschwindigkeit des schnellsten Rads ausgewählt und die im Takt erhaltenen Meßergebnisse werden in ein Schieberegister 8 für eine Vielzahl n von Meßergebnissen eingespeichert. Bei Neueinspeicherung eines Meßwerts wird der älteste Meßwert gelöscht (Zeitfenster).

Aus dem ersten und letzten im Register 8 eingespeicherten Meßergebnis sowie der konstanten Zeit zwischen diesen Meßwerten ermittelt der Block 9 die Steigung der im Register 8 gespeicherten Hilfsreferenzwerte.

In einem weiteren Auswahlblock 10 wird die zweitgrößte Radgeschwindigkeit ausgewählt und einem Referenzbildner 11 zugeführt. Dieser bildet aus der Steigung der Hilfsreferenz aus dem Block 9 und unter Verwendung der zweitgrößten Radgeschwindigkeit eine Referenzgeschwindigkeit. Die Bildung soll anhand der Fig. 2 aufgezeigt werden. Dort ist mit $V_F$ die Fahrzeuggeschwindigkeit mit $V_R$ die zweitgrößte Radgeschwindigkeit und mit $V_{Ref}$ die während einer Regelung benutzte, im Block 11 gebildete Referenzgeschwindigkeit bezeichnet.

Bei $t_1$ sei der Referenzausgangswert etwa gleich der Fahrgeschwindigkeit. Im Bereich $t_1$ bis $t_2$ bestimmt die Steigung der Hilfsreferenz den Verlauf der Referenz $V_{Ref}$. Bei $t_2$ wird die Geschwin-

digkeit des zweitschnellsten Rads größer als die Referenzgeschwindigkeit $V_{Ref}$. Sie eilt nun mit einer vorgegebenen Steigung der Radgeschwindigkeit hinterher.

Die Referenzgeschwindigkeit des Referenzbildners 11 wird einem Wahlschalter 12 zugeführt. Diesem wird auch die in einem Mittelwertbildner 13 gemittelte Vorderradgeschwindigkeit zugeführt. Der Wahlschalter 12 führt der Auswerteschaltung 5 die am Wahlschalter anliegenden Referenzgeschwindigkeiten

$$\frac{V_1 + V_2}{2}$$

oder die gemäß Fig. 2 im Block 11 gebildete Referenzgeschwindigkeit zu. Normalerweise wird der Mittelwert als Referenzgeschwindigkeit benutzt. Setzt jedoch die ABS-Regelung ein, so wird über eine Leitung 14 und ein Oder-Gatter 15 der Wahlschalter 12 umgeschaltet und nun die Referenzgeschwindigkeit des Block 11 der Auswerteschaltung zugeführt.

In einem weiteren Block 16 werden unter Verwendung der im Block 11 gebildeten Referenzgeschwindigkeit die Schlupfwerte der einzelnen Räder gebildet. Besser wäre es den Mittelwert des Mittelbildners 13 zu verwenden. Die Beträge dieser Schlüpfe werden in einem Addierer 17 addiert und die erhaltene Summe S einem Vergleicher 18 zugeführt, der ab einer vorgegebenen Größe a der Summe S ein Signal abgibt und ebenfalls und schon vor Einsetzen der Regelung den Wahlschalter 12 umschaltet. Die Schwelle a des Vergleichers kann in Abhängigkeit von der Steigung der Hilfsreferenz, die von der Fahrzeugverzögerung abhängt, variiert werden (z.B. proportional) a kann beispielsweise im Bereich der Fahrzeugverzögerung von - 0,4 g bis - 0,9 g verändert werden.

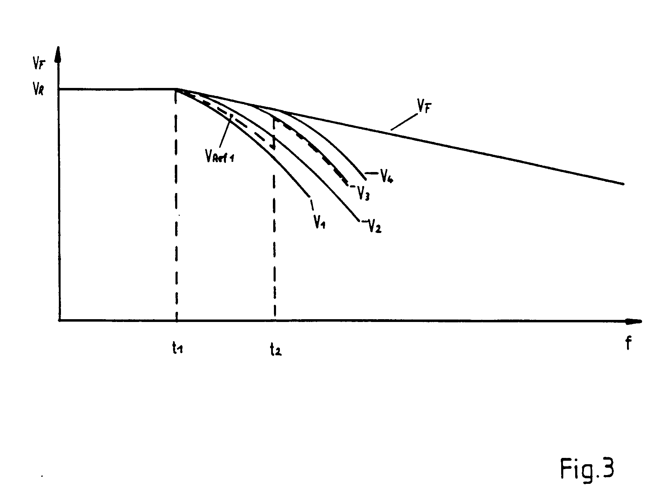

Fig. 3 zeigt die Fahrzeuggeschwindigkeit $V_F$ und die Radgeschwindigkeit $V_1$ bis $V_4$ der Meßwertgeber 1 - 4 in der Phase kurz nach Bremsbeginn ($t_1$) und bei geringen $\mu$. Die Räder laufen nach dem Anbremsen unterschiedlich in den Schlupf. Zuerst ist der Mittelwert der Vorderradgeschwindigkeit $V_1$ und $V_2$ als Referenzgeschwindigkeit $V_{Ref1}$ wirksam. Es kommt zu keinem Bremsschlupf, der die Regelung auslösen könnte. Im Addierer 17 werden jedoch die Schlupfbeträge aller Räder aufaddiert und bei $t_2$ überschreitet die Summe S den Vergleichswert a. Damit springt die Referenzgeschwindigkeit auf die zweitschnellste Radgeschwindigkeit. Günstigerweise wird bei einem Durchdrehen der Antriebsräder keine Umschaltung bei der Referenzbildung vorgenommen.

Die Erfindung kann auch bei Aufbau der Auswerteschaltung als Rechner durch entsprechende Gestaltung der Software realisiert werden

**Patentansprüche**

1. Verfahren zum Betrieb eines Antiblockierregelsystem enthaltend Radgeschwindigkeitssensoren, eine Auswerteschaltung, der die Sensorsignale zugeführt werden und die daraus Bremsdrucksteuersignale für den Rädern zugeordnete Bremsdrucksteuereinrichtungen erzeugt, wobei zur Bremsschlupfermittelung eine dem Verlauf der Fahrzeuggeschwindigkeit angenäherte Referenzgeschwindigkeit ermittelt wird, deren Steigung während eines Drehzahleinbruchs durch die Steigung einer aus den gefilterten Signalen des Sensors des am schnellsten drehenden Rads gewonnenen Hilfsreferenz gebildet wird und die während der Regelung sonst durch das Signal des Sensors des am zweitschnellsten drehenden Rads beeinflußt wird, daduch gekennzeichnet, daß das zweitschnellste Rad nur nach einer Umschaltung für die Referenzbildung wirksam ist, daß vor dieser Umschaltung der Mittelwert der Geschwindigkeiten der nicht angetriebenen Räder oder das langsamste nichtangetriebene Rad oder das schnellste nichtangetriebene Rad die Referenzgeschwindigkeit bestimmt und daß die Umschaltung sowohl bei Einsetzen der Regelung als auch bei Überschreiten einer Schwelle a durch die Summe S der Beträge aller Radschlüpfe erfolgt.

2. Verfahren nach Anspruch 1, dadurch gekennzeichnet, daß die Schwelle a eine Funktion der Fahrzeugverzögerung ist, wobei die Schwelle a mit steigender Fahrzeugverzögerung $V_F$ anwächst.

3. Verfahren nach Anspruch 2, dadurch gekennzeichnet, daß die Fahrzeugverzögerung aus der Steigung einer der Referenzgeschwindigkeiten gewonnen wird.

4. Verfahren nach Anspruch 2 oder 3, dadurch gekennzeichnet, daß die Schwelle a im Bereich der Fahrzeugverzögerung von - 0,4 g bis - 0,9 g verändert wird.

5. Verfahren nach einem der Ansprüche 1 - 4, dadurch gekennzeichnet, daß bei erkanntem Durchdrehen der Antriebsräder die Umschaltung nicht durchgeführt wird.

## Claims

1. Method of operating an antilock control system comprising wheel speed sensors, an evaluation circuit, to which the sensor signals are fed and which generates from them brake pressure control signals for brake pressure control devices assigned to the wheels, in which method, for determining brake slip, a reference speed is determined, which is approximated to the profile of the vehicle speed and the slope of which is formed during an abrupt drop in speed by the slope of an auxiliary reference, obtained from the filtered signals of the sensor of the fastest turning wheel, and during control is otherwise influenced by the signal of the sensor of the wheel turning second-fastest, characterised in that the second-fastest wheel is effective for reference forming only after a switching-over, in that before this switching-over the average value of the speeds of the non-driven wheels or the slowest non-driven wheel or the fastest non-driven wheel determines the reference speed and in that the switching-over takes place both when the control commences and when a threshold a is exceeded by the sum S of the amounts of all the wheel slips.

2. Method according to Claim 1, characterised in that the threshold a is a function of the vehicle deceleration, the threshold a increasing with increasing vehicle deceleration $V_F$.

3. Method according to Claim 2, characterised in that the vehicle deceleration is obtained from the slope of one of the reference speeds.

4. Method according to Claim 2 or 3, characterised in that the threshold a is changed in the range of vehicle deceleration from - 0.4 g to - 0.9 g.

5. Method according to one of Claims 1 - 4, characterised in that the switching-over is not carried out if spinning of the driving wheels is detected.

## Revendications

1. Procédé d'utilisation du système de régulation antiblocage, comportant des détecteurs de vitesses des roues, un circuit d'exploitation recevant les signaux des détecteurs et générant les signaux adressés aux dispositifs de commande de la pression de freinage associés aux roues, tandis que, pour déterminer le glissement au freinage, il est établi une vitesse de référence variant approximativement comme la vitesse du véhicule selon une courbe dont la pente, en cas de chute de la vitesse, est celle d'une référence auxiliaire établie à partir du signal filtré émis par le détecteur de la roue la plus rapide et qui, pendant la régulation, est influencée par le signal du détecteur associé à la roue seconde en rapidité, caractérisé en ce que cette utilisation de la roue seconde en rapidité, pour élaborer la référence, ne s'effectue qu'après une commutation avant laquelle la vitesse de référence est définie par la moyenne des vitesses des roues non motrices ou par la vitesse de la roue non motrice la plus lente ou la plus rapide, la commutation s'effectuant au moment de la mise en oeuvre de la régulation et également, si la somme des glissements de toutes les roues dépasse un seuil a.

2. Procédé selon la revendication 1, caractérisé en ce que le seuil a est fonction de la décélération du véhicule, et s'élève quand cette décélération (F) augmente.

3. Procédé selon la revendication 2, caractérisé en ce que la décélération du véhicule est établie à partir de la pente d'une des vitesses de référence.

4. Procédé selon la revendication 2 ou 3, caractérisé en ce que le seuil a peut varier dans la plage de décélération du véhicule allant de 0,4 g à 0,9 g.

5. Procédé selon une des revendications 1 à 4, caractérisé en ce que la commutation n'a pas lieu pendant que, pour le dispositif, les roues motrices apparaissent en mouvement.

Fig.1

Fig.2

Fig.3